# EUROPEAN PATENT SPECIFICATION

(11) **EP 4 223 857 B1**
(45) Date of publication and mention of the grant of the patent: **29.10.2025**
(21) Application number: 21875782.1
(22) Date of filing: 30.09.2021
(51) Int. Cl.: C10M 169/04, C10N 30/06, C10N 40/30, C10M 137/02, C10M 137/04, C10M 137/08, F25B 1/00, C09K 5/04

(54) **REFRIGERATION MACHINE OIL COMPOSITION, REFRIGERANT LUBRICATING OIL MIXED COMPOSITION, AND REFRIGERATOR**
KÄLTEMASCHINENÖLZUSAMMENSETZUNG, KÄLTEMITTELSCHMIERÖLMISCHZUSAMMENSETZUNG UND KÜHLSCHRANK
COMPOSITION D'HUILE POUR MACHINE DE RÉFRIGÉRATION, COMPOSITION MÉLANGÉE D'HUILE DE LUBRIFICATION RÉFRIGÉRANTE ET RÉFRIGÉRATEUR

(30) Priority: 30.09.2020 JP 2020165311
(43) Date of publication of application: 09.08.2023
(73) Proprietor: Idemitsu Kosan Co.,Ltd., Tokyo 100-8321 (JP)
(72) Inventor: OKUYAMA, Genki, Ichihara-shi, Chiba 299-0107 (JP); NAKAJIMA, So, Ichihara-shi, Chiba 299-0107 (JP)
(74) Representative: Hoffmann Eitle
(86) International application number: PCT/JP2021/036124
(87) International publication number: WO 2022/071486

(56) References cited:
- EP-A1- 3 521 407
- EP-B1- 1 950 279
- WO-A1-2007/105452
- WO-A1-2013/129579
- WO-A1-2014/156338
- WO-A1-2018/062099
- JP-A- 2005 325 151
- JP-A- 2008 275 275
- JP-A- 2018 123 300
- JP-A- H07 305 083
- JP-A- H09 157 681
- JP-A- H09 316 479
- JP-A- S61 296 093

## Description

### Technical Field

The present invention relates to a refrigeration machine oil composition, a refrigerant lubricating oil mixture composition, and a refrigerator.

### Background Art

Refrigeration machines, for example, compression-type refrigeration machines, generally include at least compressors, condensers, expansion mechanisms (for example, expansion valves and the like), and evaporators, and have a structure in which a mixture of refrigerant and refrigeration machine oil composition (hereinafter also referred to as "refrigerant lubricating oil mixture composition") circulates in a closed refrigeration circuit system.

As a refrigerant used in a refrigeration machine such as a compression-type refrigeration machine, a hydrocarbon refrigerant having a low ozone depletion potential is being used instead of a hydrochlorofluorocarbon (HCFC) which has been conventionally used in many cases.

Lubricating oil compositions are required not only for lubricating properties but also for economic aspects such as cost reduction. For example, in the refrigeration machine described in PTL 1, expensive synthetic oils such as ester oil, ether oil, polyalkylene glycol oil, and alkylbenzene oil are used, but improvement is required from the viewpoint of cost reduction.

From the viewpoint of cost reduction, when a mineral oil is used as a base oil instead of a synthetic oil, there is an advantage in terms of cost reduction, but there is a problem that it is inferior to a lubricating oil composition using a synthetic oil in terms of temperature dependency and lubricating properties.

Therefore, even when a mineral base oil is used, development of a lubricating oil composition having properties comparable to those obtained when a synthetic oil is used is required.

In addition, in order to meet the recent demand for further energy saving, the use of a refrigeration machine oil having a lower viscosity has been studied. For example, in PTL 2, a refrigeration machine oil composition using a mineral base oil having a 40°C kinematic viscosity of about 3.0 mm²/s has been studied.

PTL 3 relates to a refrigerator oil comprising (A) a mineral oil having a kinematic viscosity at 40 °C of 0.50 mm²/s or more and 8.00 mm²/s or less, (B) a polyphosphate ester-based compound, and (C) a dissolution aid for the component (B).

PTL 4 is related to the use of a refrigerating machine oil comprising a base oil which contains at least one substance selected from the group consisting of a mineral oil, a synthetic alicyclic hydrocarbon compound, and a synthetic aromatic hydrocarbon compound as a main component and has a kinematic viscosity at 40 °C of 1 to 8 mm²/s, in a refrigerator having a sliding part formed of an engineering plastic or including an organic coating film or an inorganic coating film and using a hydrocarbon-based, carbon dioxide-based, hydrofluorocarbon-based, or ammonia-based refrigerant.

### Citation List

### Patent Literature

PTL 1: WO 2018/199204 A
PTL 2: JP 2018-123300 A
PTL 3: EP 3 521 407 A1
PTL 4: EP 1 950 279 B1

### Summary of Invention

### Technical Problem

However, as the viscosity of the refrigeration machine oil decreases, it becomes difficult to maintain an oil film at a sliding portion, and it is necessary to reliably prevent seizure between sliding members while reducing friction even in such a boundary lubrication region.

That is, an object of the present invention is to provide a refrigeration machine oil composition which uses a mineral base oil having a low viscosity, and has good lubricating properties capable of sufficiently reducing friction and preventing seizure between the sliding members.

### Solution to Problem

The present inventors have found that the above problems can be solved by using a combination of specific phosphorus-based compounds in a refrigeration machine oil composition using a base oil containing a low-viscosity mineral oil, and have completed the present invention.

That is, the present embodiment provides the following.

A refrigeration machine oil composition containing a base oil containing a mineral oil; (A) at least one type selected from a neutral phosphate ester represented by the following general formula (1) and an amine salt thereof; and (B) at least one type selected from an acidic phosphate ester represented by the following general formula (2), an acidic phosphite ester represented by the following general formula (3), and an amine salt thereof,
wherein a content of the component (A) is 0.01 to 5.0% by mass based on the total amount of the composition,
wherein a content of the component (B) is 0.01 to 5.0% by mass based on the total amount of the composition,
and having a kinematic viscosity at 40°C of 1.0 to 6.0 mm²/s: 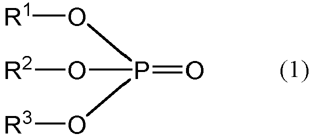 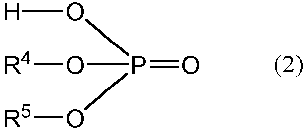 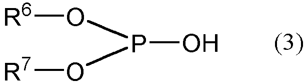 wherein R¹ to R³ in the general formula (1) each independently represent a hydrocarbon group having 1 to 24 carbon atoms; R⁴ in the general formula (2) represents a hydrogen atom or a hydrocarbon group having 6 to 24 carbon atoms, and R⁵ represents a hydrocarbon group having 6 to 24 carbon atoms; and R⁶ and R⁷ in the general formula (3) each independently represent a hydrocarbon group having 6 to 24 carbon atoms.

A refrigerant lubricating oil mixture composition containing the refrigeration machine oil composition as set forth above and a refrigerant.

A refrigerator in which the refrigerant lubricating oil mixture composition as set forth in above is sealed in a refrigeration circuit including a compressor, a condenser, an expansion mechanism, and an evaporator.

A method for producing the refrigeration machine oil composition as set forth above, including a step of blending the component (A) into the base oil containing the mineral oil, and a step of blending the component (B) into the base oil containing the mineral oil.

### Advantageous Effects of Invention

The refrigeration machine oil composition of the present invention uses a mineral base oil having a low viscosity and has good lubricating properties capable of sufficiently reducing friction and preventing seizure between sliding members.

### Description of Embodiments

In the description herein, the lower limit values and the upper limit values described stepwise with respect to preferable numerical ranges (for example, ranges of contents and the like) can be independently combined. For example, from the description of "preferably 10 to 90, more preferably 30 to 60", "preferred lower limit value (10)" and "more preferred upper limit value (60)" can be combined to be "10 to 60".

Further, in the description herein, the numerical values of the Examples are numerical values that can be used as the upper limit value or the lower limit value.

In the description herein, unless otherwise specified, the "hydrocarbon group" means a group composed only of carbon atoms and hydrogen atoms. The "hydrocarbon group" also includes an "aliphatic group" composed of a saturated or unsaturated straight chain or a saturated or unsaturated branched chain, an "alicyclic group" having one or more saturated or unsaturated carbon rings having no aromaticity, and an "aromatic group" having one or more aromatic rings having aromaticity such as a benzene ring.

### [Refrigeration machine oil composition]

The refrigeration machine oil composition of the present embodiment is required to contain a base oil containing a mineral oil, (A) at least one type selected from the above-described neutral phosphate ester and an amine salt thereof (hereinafter may be referred to as component (A)), and (B) at least one type selected from the above-described acidic phosphate ester, the above-described acidic phosphite ester, and an amine salt thereof (hereinafter may be referred to as component (B)), and to have a kinematic viscosity at 40°C (hereinafter may be referred to as "40°C kinematic viscosity") of 1.0 to 6.0 mm²/s. When the 40°C kinematic viscosity of the refrigeration machine oil composition is less than 1.0 mm²/s, seizure may occur between sliding members in a compressor of the refrigeration device, and when it exceeds 6.0 mm²/s, high energy saving performance required for refrigeration devices in recent years cannot be satisfied.

The 40°C kinematic viscosity of the refrigeration machine oil composition is preferably 1.5 mm²/s or more, more preferably 2.0 mm²/s or more, and preferably 5.0 mm²/s or less, more preferably 4.5 mm²/s or less, and these upper limit values and lower limit values may be arbitrarily combined. Specifically, the 40°C kinematic viscosity of the refrigeration machine oil composition is preferably 1.5 to 5.0 mm²/s, and more preferably 2.0 to 4.5 mm²/s.

The value of 40°C kinematic viscosity in the description herein is measured in accordance with JIS K 2283:2000.

The refrigeration machine oil composition of the present embodiment has a pour point of preferably -15.0°C or lower, and more preferably -17.5°C or lower, from the viewpoint of improving handle ability. The lower limit of the pour point is not particularly limited, but is preferably -35.0°C or higher, and more preferably -29.0°C or higher, from the viewpoint of cost performance and availability. Further, these upper limit values and lower limit values of the pour point may be arbitrarily combined. Specifically, the pour point of the refrigeration machine oil composition is preferably -35.0 to -15.0°C, and more preferably -29.0 to -17.5°C.

The value of the pour point in the description herein is measured in accordance with JIS K 2269:1987.

The refrigeration machine oil composition according to one aspect of the present invention may contain only the base oil containing a mineral oil, the component (A), and the component (B), but may contain other components in addition to these components as long as the effects of the present embodiment are not impaired.

In the refrigeration machine oil composition according to one aspect of the present invention, the total content of the base oil containing a mineral oil, the component (A), and the component (B) is preferably 80.0 to 100% by mass, more preferably 85.0 to 100% by mass, still more preferably 90.0 to 100% by mass, and particularly preferably 95.0 to 100% by mass based on the total amount (100% by mass) of the refrigeration machine oil composition.

Hereinafter, each of the components contained in the refrigeration machine oil composition of the present embodiment will be described in detail.

### <Base Oil>

In the refrigeration machine oil composition according to one aspect of the present invention, the content of the base oil containing a mineral oil is preferably 85.0% by mass or more, more preferably 90.0% by mass or more, still more preferably 92.0% by mass or more, and particularly preferably 95.0% by mass or more, and preferably 99.0% by mass or less, more preferably 98.9% by mass or less, still more preferably 98.8% by mass or less, and particularly preferably 98.7% by mass or less, based on the total amount (100% by mass) of the refrigeration machine oil composition, and these upper limit values and lower limit values may be arbitrarily combined. Specifically, the content of the base oil is preferably 85.0 to 99.0% by mass, more preferably 90.0 to 98.9% by mass, still more preferably 92.0 to 98.8% by mass, and particularly preferably 95.0 to 98.7% by mass based on the total amount of the composition. When the content of the base oil containing a mineral oil in the refrigeration machine oil composition is 85.0% by mass or more, long-term stability required for the refrigeration machine oil composition is obtained, and when the content is 99.0% by mass or less, the friction reducing effect and the anti-seizure property are improved.

As the base oil containing a mineral oil in the present embodiment, a base oil usually used as a refrigeration machine oil can be used. The base oil contains a mineral oil in an amount of preferably 50.0 to 100% by mass, more preferably 70.0 to 100% by mass, still more preferably 90 to 100% by mass, and even more preferably 95.0 to 100% by mass based on the base oil, and particularly preferably consists of a mineral oil alone.

Examples of the mineral oil contained in the base oil include: a refined oil obtained by subjecting a lubricating oil fraction obtained through distillation under reduced pressure on an atmospheric residual oil obtained by distilling a paraffinic crude oil, an intermediate-based crude oil, or a naphthene-based crude oil at atmospheric pressure or distilling a crude oil at atmospheric pressure, to at least one of treatments such as solvent deasphalting, solvent extraction, hydrocracking, solvent dewaxing, catalytic dewaxing, and hydrorefining; and an oil produced by isomerizing mineral oil-based wax.

In addition, the mineral oil contained in the base oil may be used either alone or in combination of two or more thereof.

The components other than the mineral oil contained in the base oil are not particularly limited as long as they can be used as a refrigeration machine oil and have good compatibility with the mineral oil. Examples thereof include poly α-olefins (PAO), alicyclic hydrocarbon compounds, alkylated aromatic hydrocarbon compounds, and synthetic oils such as oils produced by isomerization of GTL WAX (gas-to-liquid wax) produced by the Fischer-Tropsch process or the like, and these may be used either alone or in combination of two or more thereof.

The 40°C kinematic viscosity of the base oil is preferably 1.0 mm²/s or more, more preferably 1.5 mm²/s or more, and still more preferably 2.0 mm²/s or more, and preferably 6.0 mm²/s or less, more preferably 5.0 mm²/s or less, and still more preferably 4.5 mm²/s or less, and these upper limit values and lower limit values may be arbitrarily combined. Specifically, the 40°C kinematic viscosity of the base oil is preferably 1.0 to 6.0 mm²/s, more preferably 1.5 to 5.0 mm²/s, and still more preferably 2.0 to 4.5 mm²/s.

Further, from the viewpoint of lubricity, the base oil preferably has a %C_{A} as measured by ASTM D-3238 ring analysis (n-d-M method) of less than 1.9, more preferably 1.5 or less, and still more preferably 1.2 or less.

Furthermore, from the viewpoint of lubricity, the base oil preferably has a %C_{N} as measured by the n-d-M method of 15.0 or more, more preferably 20.0 or more, and still more preferably 25.0 or more.

### <(A) Neutral Phosphate Ester and Amine Salt Thereof>

The component (A) used in the refrigeration machine oil composition of the present embodiment is selected from neutral phosphate esters represented by the following general formula (1) and amine salts thereof. 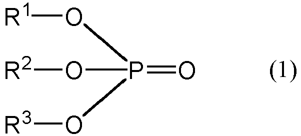 (In the formula, R¹ to R³ each independently represent a hydrocarbon group having 1 to 24 carbon atoms.)

R¹ to R³ in the general formula (1) are each independently preferably an alkyl group having 1 to 24 carbon atoms, an alkenyl group having 1 to 24 carbon atoms, an alkylaryl group having 7 to 24 carbon atoms, or an arylalkyl group having 7 to 24 carbon atoms, and more preferably an alkyl group having 6 to 20 carbon atoms, an alkenyl group having 6 to 20 carbon atoms, an alkylaryl group having 7 to 20 carbon atoms, or an arylalkyl group having 7 to 20 carbon atoms.

Examples of the neutral phosphate ester include triarylphosphate, trialkyl phosphate, trialkylarylphosphate, triarylalkyl phosphate, trialkenyl phosphate, and the like, and specific examples thereof include triphenylphosphate, tricresyl phosphate, benzyl diphenyl phosphate, ethyl diphenyl phosphate, tributyl phosphate, ethyl dibutyl phosphate, cresyl diphenyl phosphate, dicresyl phenyl phosphate, ethyl phenyl diphenyl phosphate, diethyl phenyl phenyl phosphate, propyl phenyl diphenyl phosphate, dipropyl phenyl phenyl phosphate, triethyl phenyl phosphate, tripropyl phenyl phosphate, butyl phenyl diphenyl phosphate, dibutyl phenyl phenyl phosphate, tributyl phenyl phosphate, trihexyl phosphate, tri(2-ethylhexyl) phosphate, tridecyl phosphate, trilauryl phosphate, trimyristyl phosphate, tripalmityl phosphate, tristearyl phosphate, and trioleyl phosphate, and one or more selected from these can be used.

Among these neutral phosphate esters, one or more selected from tricresyl phosphate, tert-butylphenyl diphenyl phosphate, and di(tert-butylphenyl) phenyl phosphate are preferably used, and tricresyl phosphate is most preferably used, from the viewpoint of extreme-pressure properties and friction characteristics.

Furthermore, the component (A) in the present embodiment may be an amine salt formed from the neutral phosphate ester and an amine, and specific examples of the amine include a monosubstituted amine, a disubstituted amine, and a trisubstituted amine represented by the following general formula (a).

RₘNH₃₋ₘ ··· (a)

(In the formula, R represents an alkyl group or alkenyl group having 3 to 30 carbon atoms, an aryl group or aralkyl group having 6 to 30 carbon atoms, or a hydroxyalkyl group having 2 to 30 carbon atoms; m represents 1, 2, or 3; and when there are a plurality of R's, the plurality of Rs may be the same or different.)

The alkyl group or alkenyl group having 3 to 30 carbon atoms in R in the general formula (a) may be linear, branched, or cyclic.

Examples of the monosubstituted amine include butylamine, pentylamine, hexylamine, cyclohexylamine, octylamine, laurylamine, stearylamine, oleylamine, and benzylamine, and examples of the disubstituted amine include dibutylamine, dipentylamine, dihexylamine, dicyclohexylamine, dioctylamine, dilaurylamine, distearylamine, dioleylamine, dibenzylamine, stearylmonoethanolamine, decylmonoethanolamine, hexylmonopropanolamine, benzylmonoethanolamine, phenylmonoethanolamine, and tolylmonopropanol. Examples of the trisubstituted amine include tributylamine, tripentylamine, trihexylamine, tricyclohexylamine, trioctylamine, trilaurylamine, tristearylamine, trioleylamine, tribenzylamine, dioleylmonoethanolamine, dilaurylmonopropanolamine, dioctylmonoethanolamine, dihexylmonopropanolamine, dibutylmonopropanolamine, oleyldiethanolamine, stearyldipropanolamine, lauryldiethanolamine, octyldipropanolamine, butyldiethanolamine, benzyldiethanolamine, phenyldiethanolamine, tolyldipropanolamine, xylyldiethanolamine, triethanolamine, and tripropanolamine, and one or more selected from these can be used.

In the present embodiment, as the component (A), one type selected from the above-mentioned neutral phosphate esters and amine salts thereof may be used, or two or more types may be used in combination, but it is preferable to use at least one type selected from the above-described neutral phosphate esters.

The content of the component (A) in the refrigeration machine oil composition of the present embodiment is 0.01% by mass or more, preferably 0.05% by mass or more, and more preferably 0.1% by mass or more, and is 5.0% by mass or less, preferably 2.0% by mass or less, and more preferably 1.5% by mass or less, based on the total amount of the composition, and these upper limit values and lower limit values may be arbitrarily combined. Specifically, the content of the component (A) is in the range of 0.01 to 5.0% by mass, preferably in the range of 0.05 to 2.0% by mass, and more preferably in the range of 0.1 to 1.5% by mass.

When the content of the component (A) is 0.01% by mass or more, the extreme pressure property and the friction characteristics become good, and when the content is 5.0% by mass or less, the possibility of sludge generation decreases.

### <(B) Acidic Phosphate Ester, Acidic Phosphite Ester, and Amine Salt Thereof>

The component (B) used in the refrigeration machine oil composition of the present embodiment is selected from acidic phosphate esters represented by the following general formula (2), acidic phosphite esters represented by the following general formula (3), and amine salts thereof. 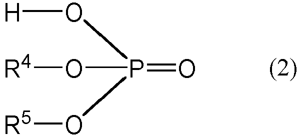 (In the formula, R⁴ represents a hydrogen atom or a hydrocarbon group having 6 to 24 carbon atoms, and R⁵ represents a hydrocarbon group having 6 to 24 carbon atoms.)

R⁴ in the general formula (2) is preferably a hydrogen atom, an alkyl group having 6 to 24 carbon atoms, an alkenyl group having 6 to 24 carbon atoms, an alkylaryl group having 6 to 24 carbon atoms or an arylalkyl group having 6 to 24 carbon atoms, more preferably a hydrogen atom, an alkyl group having 6 to 24 carbon atoms or an alkenyl group having 6 to 24 carbon atoms, and particularly preferably a hydrogen atom, an alkyl group having 10 to 20 carbon atoms or an alkenyl group having 10 to 20 carbon atoms.

R⁵ in the general formula (2) is preferably an alkyl group having 6 to 24 carbon atoms, an alkenyl group having 6 to 24 carbon atoms, an alkylaryl group having 6 to 24 carbon atoms or an arylalkyl group having 6 to 24 carbon atoms, more preferably an alkyl group having 6 to 24 carbon atoms or an alkenyl group having 6 to 24 carbon atoms, and particularly preferably an alkyl group having 10 to 20 carbon atoms or an alkenyl group having 10 to 20 carbon atoms.

As the acidic phosphate ester represented by the general formula (2), those in which R⁴ represents a hydrogen atom, an alkyl group having 6 to 24 carbon atoms or an alkenyl group having 6 to 24 carbon atoms, and R⁵ represents an alkyl group having 6 to 24 carbon atoms or an alkenyl group having 6 to 24 carbon atoms are preferable, and those in which R⁴ represents a hydrogen atom, an alkyl group having 10 to 20 carbon atoms or an alkenyl group having 10 to 20 carbon atoms, and R⁵ represents an alkyl group having 10 to 20 carbon atoms or an alkenyl group having 10 to 20 carbon atoms are particularly preferable.

Specific examples of the acidic phosphate ester represented by the general formula (2) include 2-ethylhexyl acid phosphate, ethyl acid phosphate, butyl acid phosphate, oleyl acid phosphate, tetracosyl acid phosphate, isodecyl acid phosphate, lauryl acid phosphate, tridecyl acid phosphate, stearyl acid phosphate, and isostearyl acid phosphate, and isotridecyl acid phosphate and/or monooleyl acid phosphate are preferable. 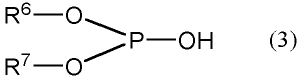 (In the formula, R⁶ and R⁷ each independently represent a hydrocarbon group having 6 to 24 carbon atoms.)

R⁶ and R⁷ in the general formula (3) are each independently preferably an alkyl group having 6 to 24 carbon atoms, an alkenyl group having 6 to 24 carbon atoms, an alkylaryl group having 6 to 24 carbon atoms or an arylalkyl group having 6 to 24 carbon atoms, more preferably an alkyl group having 6 to 24 carbon atoms or an alkenyl group having 6 to 24 carbon atoms, and particularly preferably an alkyl group having 10 to 20 carbon atoms or an alkenyl group having 10 to 20 carbon atoms.

Specific examples of the acidic phosphite ester represented by the general formula (3) include dibutyl hydrogen phosphite, dilauryl hydrogen phosphite, dioleyl hydrogen phosphite, distearyl hydrogen phosphite, and diphenyl hydrogen phosphite, with dioleyl hydrogen phosphite being preferred.

Furthermore, the component (B) in the present embodiment may be an amine salt formed from the acidic phosphate ester and/or acidic phosphite ester and an amine, and as the amine, the same amine as that used when forming the amine salt with the component (A) is used.

In the present embodiment, as the component (B), one type selected from the above-mentioned acidic phosphate esters, acidic phosphite esters, and amine salts thereof may be used, or two or more types thereof may be used in combination, but at least one type selected from the above-described acidic phosphate esters and acidic phosphite esters is preferably used.

The content of the component (B) in the refrigeration machine oil composition of the present embodiment is 0.01% by mass or more, preferably 0.05% by mass or more, and more preferably 0.1% by mass or more, and is 5.0% by mass or less, preferably 2.0% by mass or less, and more preferably 1.5% by mass or less, based on the total amount of the composition, and these upper limit values and lower limit values may be arbitrarily combined. Specifically, the content of the component (B) is in the range of 0.01 to 5.0% by mass, preferably in the range of 0.05 to 2.0% by mass, and more preferably in the range of 0.1 to 1.5% by mass.

When the content of the component (B) is 0.01% by mass or more, the extreme pressure property and the friction characteristics become good, and when the content is 5.0% by mass or less, the possibility of sludge generation decreases.

In the present embodiment, it is inferred that a component having a sufficiently long chain length of R⁵ to R⁷ is used as the component (B) unevenly distributed near the metal surface in the refrigeration circuit due to high polarity to a certain extent, and the component (A) is further combined with the component (B), and due to the influence of the steric hindrance of the hydrocarbon groups of both components, good lubricity and anti-seizure performance are exhibited even in the boundary lubrication region.

### <Other Additives>

The refrigeration machine oil composition according to one aspect of the present invention may further contain other additives as long as the effects of the present embodiment are not impaired.

As the other additives, one or more selected from the group consisting of antioxidants, oxygen scavengers, load-bearing additives, acid scavengers, copper deactivators, anti-foaming agents, and viscosity index improvers are preferably contained from the viewpoint of improving the stability of the refrigeration machine oil composition.

Each of these additives may be used either alone or in combination of two or more thereof.

The total content of the other additives is preferably 0.01% by mass or more, more preferably 0.05% by mass or more, still more preferably 0.1% by mass or more, and particularly preferably 0.5% by mass or more, and is preferably 10.0% by mass or less, more preferably 8.0% by mass or less, still more preferably 5.0% by mass or less, and particularly preferably 3.0% by mass or less, based on the total amount (100% by mass) of the refrigeration machine oil composition, and these upper limit values and lower limit values may be arbitrarily combined. Specifically, the total content of the other additives is preferably 0.01 to 10.0% by mass, more preferably 0.05 to 8.0% by mass, still more preferably 0.1 to 5.0% by mass, and particularly preferably 0.5 to 3.0% by mass.

### <Antioxidant>

The antioxidant is preferably one or more selected from the group consisting of a phenol-based antioxidant and an amine-based antioxidant.

Examples of the phenol-based antioxidant include 2,6-di-tert-butyl-p-cresol (DBPC), 2,6-di-tert-butyl-4-ethylphenol, and 2,2'-methylenebis(4-methyl-6-tert-butylphenol).

Examples of the amine-based antioxidant include phenyl-α-naphthylamine and N,N'-diphenyl-p-phenylenediamine.

Among them, 2,6-di-tert-butyl-p-cresol (DBPC) is more preferable.

### <Oxygen Scavenger>

Examples of the oxygen scavenger include aliphatic unsaturated compounds and terpenes having a double bond.

The aliphatic unsaturated compound is preferably an unsaturated hydrocarbon, and specific examples thereof include olefin; polyene such as diene and triene. As the olefin, α-olefins such as 1-tetradecene, 1-hexadecene, and 1-octadecene are preferable from the viewpoint of reactivity with oxygen.

As the aliphatic unsaturated compound other than those described above, unsaturated aliphatic alcohols having conjugated double bonds such as vitamin A represented by the molecular formula C₂₀H₃₀O ((2E,4E,6E,8E)-3,7-dimethyl-9-(2,6,6-trimethylcyclohex-1-yl)nona-2,4,6,8-tetraen-1-ol) are preferable from the viewpoint of reactivity with oxygen.

As the terpenes having double bonds, terpene hydrocarbons having double bonds are preferable, and from the viewpoint of reactivity with oxygen, α-farnesene (C₁₅H₂₄: 3,7,11-trimethyldodeca-1,3,6,10-tetraene) and β-farnesene (C₁₅H₂₄: 7,11-dimethyl-3-methylidenedodeca-1,6,10-triene) are more preferable.

### <Load-Bearing Additive>

Examples of the load-bearing additive include organic sulfur-based compounds such as monosulfides, polysulfides, sulfoxides, sulfones, thiosulfinates, sulfurized fats and oils, thiocarbonates, thiophenes, thiazoles, and methane sulfonic acid esters; thiophosphoric acid esters such as thiophosphoric acid triesters; fatty acid esters such as higher fatty acids, hydroxyaryl fatty acids, carboxylic acid-containing polyhydric alcohol esters, and acrylic acid esters; organic chlorine compounds such as chlorinated hydrocarbons and chlorinated carboxylic acid derivatives; organic fluorine compounds such as fluorinated aliphatic carboxylic acids, fluorinated ethylene resins, fluorinated alkylpolysiloxanes, and fluorinated graphite; alcohol compounds such as higher alcohols; metal compounds such as naphthenic acid salts (lead naphthenate), fatty acid salts (lead fatty acid), thiophosphates (zinc dialkyldithiophosphate), thiocarbamates, organic molybdenum compounds, organic tin compounds, organic germanium compounds, and boric acid esters.

However, from the viewpoint of reducing the corrosiveness to the copper pipe, the content of the organic sulfur-based compound or the thiophosphoric acid ester among the load-bearing additives described above should be preferably 0.1% by mass or less based on the total amount of the composition.

### <Acid Scavenger>

Examples of the acid scavenger include epoxy compounds. Examples of the epoxy compound include glycidyl ether compounds, cyclohexene oxide, α-olefin oxide, and epoxidized soybean oil, and among them, glycidyl ether compounds are preferable.

Examples of the glycidyl ether compound include an aliphatic monoalcohol having preferably 3 to 30 carbon atoms, more preferably 4 to 24 carbon atoms, and still more preferably 6 to 16 carbon atoms; an aliphatic polyhydric alcohol having 3 to 30 carbon atoms, more preferably 4 to 24 carbon atoms, and still more preferably 6 to 16 carbon atoms; and a glycidyl ether derived from an aromatic compound containing one or more hydroxy groups. The aliphatic monoalcohol or the aliphatic polyhydric alcohol may be linear, branched, or cyclic, and may be saturated or unsaturated.

In the case of an aliphatic polyhydric alcohol or an aromatic compound containing two or more hydroxy groups, all of the hydroxy groups are preferably glycidyl-etherified from the viewpoint of stability of the refrigeration machine oil and suppression of an increase in the hydroxyl value.

Examples of the glycidyl ether compound include phenyl glycidyl ether, alkyl glycidyl ether, and alkylene glycol glycidyl ether. Examples of the glycidyl ether compound include glycidyl ethers derived from linear, branched, or cyclic saturated aliphatic monoalcohols having 6 to 16 carbon atoms (i.e., alkyl glycidyl ethers in which the alkyl group has 6 to 16 carbon atoms), such as 2-ethylhexyl glycidyl ether, isononyl glycidyl ether, decyl glycidyl ether, lauryl glycidyl ether, and myristyl glycidyl ether.

The refrigeration machine oil composition of the present embodiment may contain one type of the acid scavenger alone, or may contain two or more types thereof in combination.

### <Copper Deactivator>

Examples of the copper deactivator include N-[N,N'-dialkyl (alkyl group having 3 to 12 carbon atoms) aminomethyl]triazole.

### <Anti-foaming Agent>

Examples of the anti-foaming agent include silicone-based anti-foaming agents such as silicone oil and fluorinated silicone oil.

### <Viscosity Index Improver>

Examples of the viscosity index improver include polymethacrylates, polyisobutylenes, ethylene-propylene copolymers, and styrene-diene hydrogenated copolymers.

However, from the viewpoint of maintaining the viscosity of the refrigeration machine oil composition for a long period of time, it is preferable to reduce the content of the viscosity index improver. To be specific, the content is preferably 5.0% by mass or less in terms of resin content based on the total amount of the composition.

### [Refrigerant Lubricating Oil Mixture Composition]

The present embodiment also provides a refrigerant lubricating oil mixture composition in which the above-described refrigeration machine oil composition is mixed with a refrigerant.

That is, the refrigerant lubricating oil mixture composition of the present embodiment contains the above-described refrigeration machine oil composition of the present embodiment and the refrigerant.

The refrigerant used in the present embodiment will be described below.

The refrigerant contained in the refrigerant lubricating oil mixture composition of the present embodiment is preferably one or more selected from hydrocarbon-based refrigerants, carbon dioxide and ammonia, and is particularly preferably a hydrocarbon-based refrigerant.

As the hydrocarbon-based refrigerant, a hydrocarbon having 1 to 8 carbon atoms is preferably used, a hydrocarbon having 1 to 5 carbon atoms is more preferably used, and a hydrocarbon having 3 to 5 carbon atoms is still more preferably used. When the number of carbon atoms is 8 or less, the boiling point of the refrigerant does not become too high, which is preferable as a refrigerant. Examples of the hydrocarbon-based refrigerant include one or more selected from the group consisting of methane, ethane, ethylene, propane (R290), cyclopropane, propylene, n-butane, isobutane (R600a), 2-methylbutane, n-pentane, isopentane, cyclopentaneisobutane, and n-butane, and these may be used alone or in combination of two or more thereof.

Propane and/or isobutane is particularly preferred as the hydrocarbon refrigerant.

In the refrigerant lubricating oil mixture composition according to one aspect of the present invention, the mixing ratio of the refrigerant and the refrigeration machine oil composition is preferably 1/99 or more, more preferably 5/95 or more, and still more preferably 8/92 or more, and is preferably 90/10 or less, more preferably 70/30 or less, and still more preferably 50/50 or less in terms of mass ratio of refrigeration machine oil composition/refrigerant, and these upper limit values and lower limit values may be arbitrarily combined. To be specific, the mass ratio of refrigeration machine oil composition/refrigerant is preferably 1/99 to 90/10, more preferably 5/95 to 70/30, and still more preferably 8/92 to 50/50.

When the mass ratio of refrigeration machine oil composition/refrigerant is within the above range, lubricity is improved and the refrigerating capacity of the refrigeration machine is improved.

### [Use of refrigeration machine oil composition and refrigerant lubricating oil mixture composition of the present invention]

The refrigeration machine oil composition and the refrigerant lubricating oil mixture composition of the present invention are preferably used in, for example, air conditioners, refrigerators, automatic vending machines, showcases, refrigeration systems, hot water supply systems, or heating systems. Examples of the air conditioner include a car air conditioner such as an open type car air conditioner and an electric car air conditioner; and a gas heat pump (GHP) air conditioner.

### [Method for lubricating refrigeration machine using refrigeration machine oil composition of the present invention]

The present embodiment also provides a method for lubricating sliding members included in an air conditioner, a refrigerator, an automatic vending machine, a showcase, a refrigeration system, a hot water supply system, or a heating system as described above using the refrigeration machine oil composition and the refrigerant lubricating oil mixture composition of the present invention.

### [Refrigerator]

The present embodiment also provides a refrigerator in which the refrigerant lubricating oil mixture composition is sealed in a refrigeration circuit including a compressor, a condenser, an expansion mechanism (for example, an expansion valve), and an evaporator.

### [Method for Producing Refrigeration machine oil composition]

The present embodiment also provides a method for producing the refrigeration machine oil composition, which includes a step of blending the component (A) into the base oil containing the mineral oil, and a step of blending the component (B) into the base oil containing the mineral oil.

### [One aspect of the present invention provided]

According to one aspect of the present invention, which is defined in the appended claims, the following embodiments are provided.

The present invention provides a refrigeration machine oil composition containing a base oil containing a mineral oil; (A) at least one type selected from a neutral phosphate ester represented by the following general formula (1) and an amine salt thereof; and (B) at least one type selected from an acidic phosphate ester represented by the following general formula (2), an acidic phosphite ester represented by the following general formula (3), and an amine salt thereof,
wherein a content of the component (A) is 0.01 to 5.0% by mass based on the total amount of the composition,
wherein a content of the component (B) is 0.01 to 5.0% by mass based on the total amount of the composition,
and having a kinematic viscosity at 40°C of 1.0 to 6.0 mm²/s: 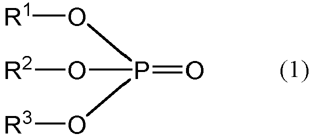 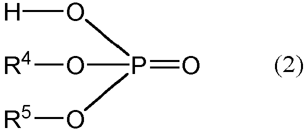 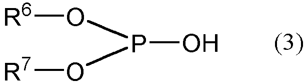 wherein R¹ to R³ in the general formula (1) each independently represent a hydrocarbon group having 1 to 24 carbon atoms; R⁴ in the general formula (2) represents a hydrogen atom or a hydrocarbon group having 6 to 24 carbon atoms, and R⁵ represents a hydrocarbon group having 6 to 24 carbon atoms; and R⁶ and R⁷ in the general formula (3) each independently represent a hydrocarbon group having 6 to 24 carbon atoms.

In a preferred embodiment, R¹ to R³ in the general formula (1) are each independently an alkyl group having 6 to 20 carbon atoms, an alkenyl group having 6 to 20 carbon atoms, an alkylaryl group having 7 to 24 carbon atoms, or an arylalkyl group having 7 to 24 carbon atoms.

In a preferred embodiment, R⁴ in the general formula (2) represents a hydrogen atom, an alkyl group having 6 to 24 carbon atoms, or an alkenyl group having 6 to 24 carbon atoms; R⁵ represents an alkyl group having 6 to 24 carbon atoms or an alkenyl group having 6 to 24 carbon atoms; and R⁶ and R⁷ in the general formula (3) each independently represent an alkyl group having 6 to 24 carbon atoms or an alkenyl group having 6 to 24 carbon atoms.

In a preferred embodiment, the component (A) is at least one type selected from the neutral phosphate ester.

In a preferred embodiment, the component (B) is at least one type selected from the acid phosphate ester and the acid phosphite ester.

In a preferred embodiment, a content of the mineral oil in the base oil is 70.0 to 100% by mass.

In a preferred embodiment, a content of the base oil is 90.0% by mass or more based on the total amount of the composition.

In a preferred embodiment, the base oil has a %C_{A} by n-d-M ring analysis of less than 1.9.

In a preferred embodiment, the refrigeration machine oil composition further contains one or more other additives selected from an antioxidant, an oxygen scavenger, a load-bearing additive, an acid scavenger, a copper deactivator, an anti-foaming agent, and a viscosity index improver.

The present invention further provides a refrigerant lubricating oil mixture composition containing the refrigeration machine oil composition of the present invention and a refrigerant.

In a preferred embodiment, the refrigerant is one or more selected from a hydrocarbon-based refrigerant, carbon dioxide, and ammonia.

The present invention further provides a refrigerator in which the refrigerant lubricating oil mixture composition of the present invention is sealed in a refrigeration circuit including a compressor, a condenser, an expansion mechanism, and an evaporator.

The present invention further provides a method for producing the refrigeration machine oil composition of the present invention, including a step of blending the component (A) into the base oil containing the mineral oil, and a step of blending the component (B) into the base oil containing the mineral oil.

### Examples

The present embodiment will be specifically described with reference to the following Examples. However, the present embodiment is not limited to the following Examples.

### [Measurement Methods of Various Physical Property Values]

Each of the raw materials used in respective Examples and Comparative Examples and each of the properties of the refrigeration machine oil composition in respective Examples and Comparative Examples were measured in the following manner.

### (1) Kinematic viscosity

The 40°C kinematic viscosity and the 100°C kinematic viscosity were measured in accordance with JIS K2283:2000.

### (2) Acid value

The acid value was measured in accordance with JIS K2501:2003, Chapter 5 (indicator titration method).

### (3) Pour point

The pour point was measured in accordance with JIS K 2269:1987.

### (4) Phosphorus content

The phosphorus content was measured in accordance with JPI-5S-38-03.

### [Details of Respective Components Used for Preparation of Refrigeration machine oil composition]

Details of the respective components used in the preparation of the refrigeration machine oil composition are given below.

### (1) Naphthenic base oil

Naphthenic mineral oil (40°C kinematic viscosity: 4.320 mm²/s, 100°C kinematic viscosity: 1.540 mm²/s, %C_{A}: 0.9, %C_{N}: 41.4, %C_{P}: 57.7) was used.

### (2) Paraffinic base oil

Paraffinic mineral oil (40°C kinematic viscosity: 2.584 mm²/s, 100°C kinematic viscosity: 1.087 mm²/s, %C_{A}: 0.4, %C_{N}: 29.6, %C_{P}: 70.1) was used.

The paraffin content (%C_{P}), the naphthene content (%C_{N}), and the aromatic content (%C_{A}) of the naphthenic base oil and the paraffinic base oil were measured by ASTM D-3238 ring analysis (n-d-M method).

### (3) Neutral phosphate ester

Tricresyl phosphate (phosphorus content: 8.4% by mass, a compound in which R¹ to R³ are hydrocarbon groups having 7 carbon atoms) was used.

### (4) Acidic phosphite ester

Dioleyl hydrogen phosphite (phosphorus content: 5.1% by mass, a compound in which R⁶ and R⁷ are hydrocarbon groups having 18 carbon atoms) was used.

### (5) Acidic phosphate ester 1

Isotridecyl acid phosphate (phosphorus content: 8.2% by mass, a mixture of a compound in which R⁴ is a hydrogen atom and R⁵ is a hydrocarbon group having 13 carbon atoms and a compound in which R⁴ and R⁵ are hydrocarbon groups having 13 carbon atoms) was used.

### (6) Acidic phosphate ester 2

Monooleyl acid phosphate (phosphorus content: 6.3% by mass, a compound in which R⁴ is a hydrogen atom and R⁵ is a hydrocarbon group having 18 carbon atoms) was used.

### (7) Phosphoric acid amine salt

A 1:1 mixture of C₁₂₋₁₄-t-alkylammonium hydrogen methyl phosphate and C₁₂₋₁₄-t-alkylammonium dimethyl phosphate (phosphorus content: 9.5% by mass, nitrogen content: 4.95% by mass) was used.

### (8) Antioxidant

2,6-di-tert-butyl-p-cresol (DBPC) was used.

### (9) Acid scavenger

2-ethylhexyl glycidyl ether was used.

### (10) Anti-foaming agent

A silicone-based anti-foaming agent (silicone amount: 0.5% by mass) was used.

### [Examples 1 to 7 and Comparative Examples 1 to 9]

Each of the above components was mixed to prepare a refrigeration machine oil composition having the composition shown in Tables 1 and 2, and a JASO pendulum test, a Falex seizure load test, and a two layer separation temperature test described below were performed.

### <JASO pendulum test>

In accordance with "Soda pendulum test" specified in JASO-M314-88, friction coefficient µ was measured at oil temperatures of 50°C and 80°C using Soda pendulum tester (II) type.

### <Falex seizure load test>

Using a Falex tester based on ASTM D3233, pins/blocks were set, and seizure load of sample oil (refrigeration machine oil composition) was measured under the following conditions.
Pin: AISI-3125
Block: AISI-1137
Conditioning: load 1112N x 1 minute
Rotation speed: 290 rpm
Oil temperature: room temperature

### <Two layer separation temperature test>

The low-temperature-side two layer separation temperature between refrigeration machine oil composition and R600a refrigerant (isobutane) was measured in accordance with "Test method for compatibility with refrigerant" specified in JIS K2211-2009 Annex D. The lower the two layer separation temperature of the refrigeration machine oil composition on the low temperature side with the R600a refrigerant, the better the compatibility with the R600a refrigerant at a low temperature.

The case where the two layer separation did not occur up to -50°C is indicated by "-50>".

### [Table 1]

**Table 1**

| | | | Unit | Example 1 | Example 2 | Comparative Example 1 | Comparative Example 2 |
|---|---|---|---|---|---|---|---|
| Blend proportion | Naphthenic base oil | | % by mass | 98.3 | 97.8 | 98.8 | 98.6 |
| | Paraffinic base oil | | % by mass | | | | |
| | Neutral phosphate ester | | % by mass | 0.5 | 0.5 | 0.5 | 0.5 |
| | Acidic phosphite ester | | % by mass | 0.5 | 1.0 | | |
| | Acidic phosphate ester 1 | | % by mass | | | | |
| | Acidic phosphate ester 2 | | % by mass | | | | |
| | Phosphoric acid amine salt | | % by mass | | | | 0.2 |
| | Antioxidant | | % by mass | 0.3 | 0.3 | 0.3 | 0.3 |
| | Acid scavenger | | % by mass | 0.3 | 0.3 | 0.3 | 0.3 |
| | Anti-foaming agent | | % by mass | 0.1 | 0.1 | 0.1 | 0.1 |
| | Total | | % by mass | 100.0 | 100.0 | 100.0 | 100.0 |
| | | | | | | | |
| Properties | 40°C Kinematic viscosity | | mm²/s | 4.181 | 4.209 | 4.417 | 4.161 |
| | 100°C Kinematic viscosity | | mm²/s | 1.489 | 1.499 | 1.480 | 1.483 |
| | Acid value | | mgKOH/g | 0.03 | 0.06 | 0.01 | 0.51 |
| | Pour point | | °C | -27.5 | -27.5 | -27.5 | -27.5 |
| | Phosphorus content | | mass ppm | 667 | 924 | 412 | 599 |
| Evaluation | JASO pendulum | 50°C | - | 0.105 | 0.103 | 0.175 | 0.141 |
| | | 80°C | - | 0.107 | 0.106 | 0.218 | 0.162 |
| | Falex seizure load | | N | 5080 | 8310 | 2400 | 4760 |
| | Two layer separation temperature | | °C | -50> | -50> | -50> | -50> |

### [Table 2]

**Table 2**

| | | | Unit | Example | | | | | Comparative Example | | | | | | |
|---|---|---|---|---|---|---|---|---|---|---|---|---|---|---|---|
| | | | | 3 | 4 | 5 | 6 | 7 | 3 | 4 | 5 | 6 | 7 | 8 | 9 |
| Blend proportion | Naphthenic base oil | | % by mass | | | | | | | | | | | | |
| | Paraffinic base oil | | % by mass | 98.4 | 98.7 | 98.4 | 98.7 | 98.4 | 100.0 | 98.9 | 99.2 | 98.9 | 98.9 | 98.9 | 98.9 |
| | Neutral phosphate ester | | % by mass | 0.5 | 0.5 | 0.5 | 0.5 | 0.5 | | 0.5 | | | | | |
| | Acidic phosphite ester | | % by mass | 0.5 | | | | | | | 0.2 | 0.5 | | | |
| | Acidic phosphate ester 1 | | % by mass | | 0.2 | 0.5 | | | | | | | 0.5 | | |
| | Acidic phosphate ester 2 | | % by mass | | | | 0.2 | 0.5 | | | | | | 0.5 | |
| | Phosphoric acid amine salt | | % by mass | | | | | | | | | | | | 0.5 |
| | Antioxidant | | % by mass | 0.3 | 0.3 | 0.3 | 0.3 | 0.3 | | 0.3 | 0.3 | 0.3 | 0.3 | 0.3 | 0.3 |
| | Acid scavenger | | % by mass | 0.3 | 0.3 | 0.3 | 0.3 | 0.3 | | 0.3 | 0.3 | 0.3 | 0.3 | 0.3 | 0.3 |
| | Total | | % by mass | 100.0 | 100.0 | 100.0 | 100.0 | 100.0 | 100.0 | 100.0 | 100.0 | 100.0 | 100.0 | 100.0 | 100.0 |
| | | | | | | | | | | | | | | | |
| Properties | 40°C Kinematic viscosity | | mm²/s | 2.545 | 2.544 | 2.569 | 2.545 | 2.566 | 2.584 | 2.576 | 2.538 | 2.552 | 2.552 | 2.558 | 2.548 |
| | 100°C Kinematic viscosity | | mm²/s | 1.094 | 1.090 | 1.096 | 1.091 | 1.099 | 1.087 | 1.093 | 1.091 | 1.096 | 1.095 | 1.098 | 1.093 |
| | Acid value | | mgKOH/g | 0.03 | 0.28 | 0.77 | 0.22 | 0.60 | 0.00 | 0.01 | 0.01 | 0.03 | 1.10 | 0.92 | 1.27 |
| | Pour point | | °C | -20 | -20 | -20 | -20 | -20 | -20 | -20 | -20 | -20 | -20 | -20 | -20 |
| | Phosphorus content | | mass ppm | 678 | 591 | 820 | 550 | 747 | 5> | 410 | 107 | 262 | 442 | 340 | 464 |
| Evaluation | JASO pendulum | 50°C | - | 0.116 | 0.124 | 0.125 | 0.119 | 0.112 | 0.379 | 0.186 | 0.154 | 0.136 | 0.143 | 0.132 | 0.159 |
| | | 80°C | - | 0.121 | 0.133 | 0.135 | 0.115 | 0.107 | 0.395 | 0.207 | 0.138 | 0.141 | 0.158 | 0.128 | 0.150 |
| | Falex seizure load | | N | 3390 | 3730 | 5310 | 5470 | 7610 | 1112> | 2100 | 1950 | 4950 | 5110 | 7840 | 3100 |
| | Two layer separation temperature | | °C | -50> | -50> | -50> | -50> | -50> | -50> | -50> | -50> | -50> | -50> | -50> | -50> |

From Table 1, the refrigeration machine oil composition of Examples 1 to 7 has a low friction coefficient in the JASO pendulum test, to be specific, the friction coefficient at 50°C is 0.125 or less and the friction coefficient at 80°C is 0.135 or less.
Moreover, the results of the Falex seizure load test are also good.

On the other hand, the compositions of Comparative Examples 1 to 9, which did not contain the component (A) or the component (B), were inferior in the friction coefficient in the JASO pendulum test and were also inferior in the result of the Falex seizure load in some cases, even if they contained phosphoric acid amine salt.

## Claims

1. A refrigeration machine oil composition comprising a base oil comprising a mineral oil; (A) at least one type selected from a neutral phosphate ester represented by the following general formula (1) and an amine salt thereof; and (B) at least one type selected from an acidic phosphate ester represented by the following general formula (2), an acidic phosphite ester represented by the following general formula (3), and an amine salt thereof,
wherein a content of the component (A) is 0.01 to 5.0% by mass based on the total amount of the composition,
wherein a content of the component (B) is 0.01 to 5.0% by mass based on the total amount of the composition,
and having a kinematic viscosity at 40°C of 1.0 to 6.0 mm²/s: 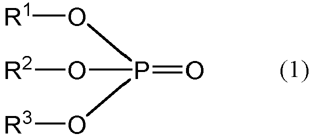 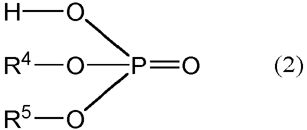 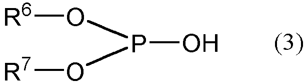 wherein R¹ to R³ in the general formula (1) each independently represent a hydrocarbon group having 1 to 24 carbon atoms; R⁴ in the general formula (2) represents a hydrogen atom or a hydrocarbon group having 6 to 24 carbon atoms, and R⁵ represents a hydrocarbon group having 6 to 24 carbon atoms; and R⁶ and R⁷ in the general formula (3) each independently represent a hydrocarbon group having 6 to 24 carbon atoms.

2. The refrigeration machine oil composition according to claim 1, wherein R¹ to R³ in the general formula (1) are each independently an alkyl group having 6 to 20 carbon atoms, an alkenyl group having 6 to 20 carbon atoms, an alkylaryl group having 7 to 24 carbon atoms, or an arylalkyl group having 7 to 24 carbon atoms.

3. The refrigeration machine oil composition according to claim 1 or 2, wherein R⁴ in the general formula (2) represents a hydrogen atom, an alkyl group having 6 to 24 carbon atoms, or an alkenyl group having 6 to 24 carbon atoms; R⁵ represents an alkyl group having 6 to 24 carbon atoms or an alkenyl group having 6 to 24 carbon atoms; and R⁶ and R⁷ in the general formula (3) each independently represent an alkyl group having 6 to 24 carbon atoms or an alkenyl group having 6 to 24 carbon atoms.

4. The refrigeration machine oil composition according to any of claims 1 to 3, wherein the component (A) is at least one type selected from the neutral phosphate ester.

5. The refrigeration machine oil composition according to any of claims 1 to 4, wherein the component (B) is at least one type selected from the acid phosphate ester and the acid phosphite ester.

6. The refrigeration machine oil composition according to any of claims 1 to 5, wherein a content of the mineral oil in the base oil is 70.0 to 100% by mass.

7. The refrigeration machine oil composition according to any of claims 1 to 6, wherein a content of the base oil is 90.0% by mass or more based on the total amount of the composition.

8. The refrigeration machine oil composition according to any of claims 1 to 7, wherein the base oil has a %C_{A} by n-d-M ring analysis of less than 1.9.

9. The refrigeration machine oil composition according to any of claims 1 to 8, further comprising one or more other additives selected from an antioxidant, an oxygen scavenger, a load-bearing additive, an acid scavenger, a copper deactivator, an anti-foaming agent, and a viscosity index improver.

10. A refrigerant lubricating oil mixture composition comprising the refrigeration machine oil composition according to any of claims 1 to 9 and a refrigerant.

11. The refrigerant lubricating oil mixture composition according to claim 10, wherein the refrigerant is one or more selected from a hydrocarbon-based refrigerant, carbon dioxide, and ammonia.

12. A refrigerator in which the refrigerant lubricating oil mixture composition according to claim 10 or 11 is sealed in a refrigeration circuit comprising a compressor, a condenser, an expansion mechanism, and an evaporator.

13. A method for producing the refrigeration machine oil composition according to any of claims 1 to 9, comprising a step of blending the component (A) into the base oil containing the mineral oil, and a step of blending the component (B) into the base oil containing the mineral oil.

## Patentansprüche

1. Kühlmaschinenölzusammensetzung, umfassend ein Grundöl, das ein Mineralöl umfasst; (A) mindestens einen Typ, ausgewählt aus einem neutralen Phosphatester, dargestellt durch die folgende allgemeine Formel (1) und einem Aminsalz davon; und (B) mindestens einen Typ, ausgewählt aus einem sauren Phosphatester, dargestellt durch die folgende allgemeine Formel (2), einem sauren Phosphitester, dargestellt durch die folgende allgemeine Formel (3), und einem Aminsalz davon,
wobei ein Gehalt der Komponente (A) 0,01 bis 5,0 Massen-%, bezogen auf die Gesamtmenge der Zusammensetzung, beträgt,
wobei ein Gehalt der Komponente (B) 0,01 bis 5,0 Massen-%, bezogen auf die Gesamtmenge der Zusammensetzung, beträgt,
und welches eine kinematische Viskosität bei 40°C von 1,0 bis 6,0 mm²/s aufweist: 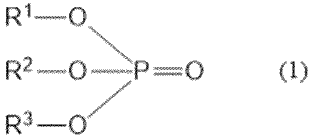 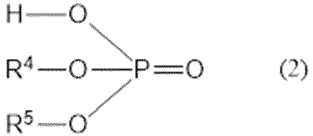 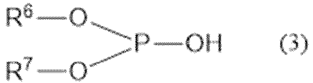
worin R¹ bis R³ in der allgemeinen Formel (1) jeweils unabhängig eine Kohlenwasserstoffgruppe mit 1 bis 24 Kohlenstoffatomen darstellen; R⁴ in der allgemeinen Formel (2) ein Wasserstoffatom oder eine Kohlenwasserstoffgruppe mit 6 bis 24 Kohlenstoffatomen darstellt, und R⁵ eine Kohlenwasserstoffgruppe mit 6 bis 24 Kohlenstoffatomen darstellt; und R⁶ und R⁷ in der allgemeinen Formel (3) jeweils unabhängig eine Kohlenwasserstoffgruppe mit 6 bis 24 Kohlenstoffatomen darstellen.

2. Kühlmaschinenölzusammensetzung gemäß Anspruch 1, wobei R¹ bis R³ in der allgemeinen Formel (1) jeweils unabhängig eine Alkylgruppe mit 6 bis 20 Kohlenstoffatomen, eine Alkenylgruppe mit 6 bis 20 Kohlenstoffatomen, eine Alkylarylgruppe mit 7 bis 24 Kohlenstoffatomen oder eine Arylalkylgruppe mit 7 bis 24 Kohlenstoffatomen sind.

3. Kühlmaschinenölzusammensetzung gemäß Anspruch 1 oder 2, wobei R⁴ in der allgemeinen Formel (2) ein Wasserstoffatom, eine Alkylgruppe mit 6 bis 24 Kohlenstoffatomen oder eine Alkenylgruppe mit 6 bis 24 Kohlenstoffatomen darstellt; R⁵ eine Alkylgruppe mit 6 bis 24 Kohlenstoffatomen oder eine Alkenylgruppe mit 6 bis 24 Kohlenstoffatomen darstellt; und R⁶ und R⁷ in der allgemeinen Formel (3) jeweils unabhängig eine Alkylgruppe mit 6 bis 24 Kohlenstoffatomen oder eine Alkenylgruppe mit 6 bis 24 Kohlenstoffatomen darstellen.

4. Kühlmaschinenölzusammensetzung gemäß mindestens einem der Ansprüche 1 bis 3, wobei die Komponente (A) mindestens ein Typ ist, ausgewählt aus dem neutralen Phosphatester.

5. Kühlmaschinenölzusammensetzung gemäß mindestens einem der Ansprüche 1 bis 4, wobei die Komponente (B) mindestens ein Typ ist, ausgewählt aus dem sauren Phosphatester und dem sauren Phosphitester.

6. Kühlmaschinenölzusammensetzung gemäß mindestens einem der Ansprüche 1 bis 5, wobei der Gehalt an Mineralöl im Grundöl 70,0 bis 100 Massen-% beträgt.

7. Kühlmaschinenölzusammensetzung gemäß mindestens einem der Ansprüche 1 bis 6, wobei ein Gehalt an Grundöl 90,0 Massen-% oder mehr, bezogen auf die Gesamtmenge der Zusammensetzung, beträgt.

8. Kühlmaschinenölzusammensetzung gemäß mindestens einem der Ansprüche 1 bis 7, wobei das Grundöl einen C_{A}-Prozentsatz gemäß n-d-M-Ring-Analyse von weniger als 1,9 aufweist.

9. Kühlmaschinenölzusammensetzung gemäß mindestens einem der Ansprüche 1 bis 8, die ferner ein oder mehrere weitere Additive umfasst, ausgewählt aus einem Antioxidationsmittel, einem Sauerstofffänger, einem Last-tragenden Additiv, einem Säurefänger, einem Kupferdeaktivator, einem Antischaummittel und einem Viskositätsindexverbesserer.

10. Kühlmittelschmierölmischungszusammensetzung, die die Kühlmaschinenölzusammensetzung gemäß mindestens einem der Ansprüche 1 bis 9 und ein Kühlmittel umfasst.

11. Kühlmittelschmierölmischungszusammensetzung gemäß Anspruch 10, wobei das Kühlmittel eines oder mehrere ist, ausgewählt aus einem Kohlenwasserstoff-basierten Kühlmittel, Kohlendioxid und Ammoniak.

12. Kühlschrank, in dem die Kühlmittelschmierölmischungszusammensetzung gemäß Anspruch 10 oder 11 in einem Kühlkreislauf, der einen Kompressor, einen Kondensator, einen Expansionsmechanismus und einen Verdampfer umfasst, eingeschlossen ist.

13. Verfahren zur Herstellung der Kühlmaschinenölzusammensetzung gemäß mindestens einem der Ansprüche 1 bis 9, umfassend einen Schritt des Einmischens der Komponente (A) in das Grundöl, welches das Mineralöl enthält, und einen Schritt des Einmischens der Komponente (B) in das Grundöl, welches das Mineralöl enthält.

## Revendications

1. Composition d'huile pour machine de réfrigération comprenant une huile de base comprenant une huile minérale ; (A) au moins un type sélectionné parmi un ester de phosphate neutre représenté par la formule générale suivante (1) et un sel d'amine de celui-ci ; et (B) au moins un type sélectionné parmi un ester de phosphate acide représenté par la formule générale suivante (2), un ester de phosphite acide représenté par la formule générale suivante (3) et un sel d'amine de celui-ci,
dans laquelle une teneur en composant (A) est comprise de 0,01 à 5,0 % en masse sur la base de la quantité totale de la composition,
dans laquelle une teneur en composant (B) est comprise de 0,01 à 5,0 % en masse sur la base de la quantité totale de la composition,
et présentant une viscosité cinématique à 40°C de 1,0 à 6,0 mm²/s : 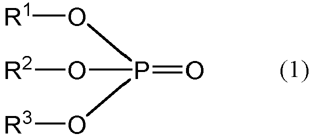 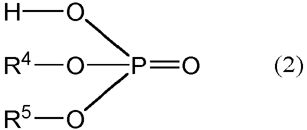 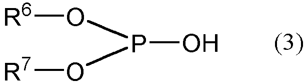 dans laquelle R¹ à R³ dans la formule générale (1) représentent chacun indépendamment un groupe d'hydrocarbures présentant 1 à 24 atomes de carbone ; R⁴ dans la formule générale (2) représente un atome d'hydrogène ou un groupe d'hydrocarbures présentant 6 à 24 atomes de carbone, et R⁵ représente un groupe d'hydrocarbures présentant 6 à 24 atomes de carbone ; et R ⁶ et R⁷ dans la formule générale (3) représentent chacun indépendamment un groupe d'hydrocarbures présentant 6 à 24 atomes de carbone.

2. Composition d'huile pour machine de réfrigération selon la revendication 1, dans laquelle R¹ à R³ dans la formule générale (1) sont chacun indépendamment un groupe alkyle présentant 6 à 20 atomes de carbone, un groupe alcényle présentant 6 à 20 atomes de carbone, un groupe alkylaryle présentant 7 à 24 atomes de carbone, ou un groupe arylalkyle présentant 7 à 24 atomes de carbone.

3. Composition d'huile pour machine de réfrigération selon la revendication 1 ou 2, dans laquelle R⁴ dans la formule générale (2) représente un atome d'hydrogène, un groupe alkyle présentant 6 à 24 atomes de carbone, ou un groupe alcényle présentant 6 à 24 atomes de carbone ; R⁵ représente un groupe alkyle présentant 6 à 24 atomes de carbone ou un groupe alcényle présentant 6 à 24 atomes de carbone ; et R⁶ et R⁷ dans la formule générale (3) représentent chacun indépendamment un groupe alkyle présentant 6 à 24 atomes de carbone ou un groupe alcényle présentant 6 à 24 atomes de carbone.

4. Composition d'huile pour machine de réfrigération selon l'une quelconque des revendications 1 à 3,
dans laquelle le composant (A) est au moins un type sélectionné parmi l'ester de phosphate neutre.

5. Composition d'huile pour machine de réfrigération selon l'une quelconque des revendications 1 à 4, dans laquelle le composant (B) est au moins un type sélectionné parmi l'ester de phosphate acide et l'ester de phosphite acide.

6. Composition d'huile pour machine de réfrigération selon l'une quelconque des revendications 1 à 5, dans laquelle la teneur en huile minérale dans l'huile de base est comprise de 70,0 à 100 % en masse.

7. Composition d'huile pour machine de réfrigération selon l'une quelconque des revendications 1 à 6, dans laquelle la teneur en huile de base est supérieure ou égale à 90,0% en masse sur la base de la quantité totale de la composition.

8. Composition d'huile pour machine de réfrigération selon l'une quelconque des revendications 1 à 7, dans laquelle l'huile de base présente un %C_{A} par analyse de cycle n-d-M inférieur à 1,9.

9. Composition d'huile pour machine de réfrigération selon l'une quelconque des revendications 1 à 8, comprenant en outre un ou plusieurs autres additifs sélectionnés parmi un antioxydant, un piégeur d'oxygène, un additif porteur de charge, un piégeur d'acide, un désactivateur de cuivre, un agent anti-mousse et un améliorant d'indice de viscosité.

10. Composition de mélange d'huile lubrifiante réfrigérante comprenant la composition d'huile pour machine de réfrigération selon l'une quelconque des revendications 1 à 9 et un réfrigérant.

11. Composition de mélange d'huile lubrifiante réfrigérante selon la revendication 10, dans laquelle le réfrigérant est un ou plusieurs éléments sélectionnés parmi un réfrigérant à base d'hydrocarbures, du dioxyde de carbone et de l'ammoniac.

12. Réfrigérateur dans lequel la composition de mélange d'huile lubrifiante réfrigérante selon la revendication 10 ou 11 est scellée dans un circuit de réfrigération comprenant un compresseur, un condenseur, un mécanisme de détente et un évaporateur.

13. Procédé de production de la composition d'huile pour machine de réfrigération selon l'une quelconque des revendications 1 à 9, comprenant une étape consistant à mélanger le composant (A) dans l'huile de base contenant l'huile minérale, et une étape consistant à mélanger le composant (B) dans l'huile de base contenant l'huile minérale.
